# EUROPÄISCHE PATENTSCHRIFT

(11) **EP 4 426 464 B1**
(45) Veröffentlichungstag und Bekanntmachung des Hinweises auf die Patenterteilung: **22.04.2026**
(21) Anmeldenummer: 22789483.9
(22) Anmeldetag: 13.09.2022
(51) Int. Cl.: B01D 46/00, B01D 46/10, B01D 46/42, B01D 46/52, F02M 35/02, F02M 35/024, F02M 35/12, F02M 35/14

(54) **FILTERSYSTEM MIT EINEM FILTERGEHÄUSE UND EINEM AUSTAUSCHBAREN FILTERELEMENT**
FILTER SYSTEM COMPRISING A FILTER HOUSING AND A REPLACEABLE FILTER ELEMENT
SYSTÈME DE FILTRATION COMPRENANT UN BOÎTIER DE FILTRE ET UN ÉLÉMENT FILTRANT REMPLAÇABLE

(30) Priorität: 04.11.2021 DE 102021128686
(43) Veröffentlichungstag der Anmeldung: 11.09.2024
(73) Patentinhaber: MANN+HUMMEL GmbH, 71636 Ludwigsburg (DE)
(72) Erfinder: SCHMID, Daniel, 74343 Sachsenheim (DE); KOHN, Kevin, 71723 Großbottwar (DE)
(74) Vertreter: Mann + Hummel Intellectual Property
(86) Internationale Anmeldenummer: PCT/EP2022/075361
(87) Internationale Veröffentlichungsnummer: WO 2023/078599

(56) Entgegenhaltungen:
- CN-A- 112 282 990
- JP-A- 2002 061 543
- JP-A- H10 205 400
- KR-A- 20130 060 012

## Beschreibung

### Technisches Gebiet

Die Erfindung betrifft ein Filtersystem mit einem Filtergehäuse, einem solchen austauschbaren Filterelement mit einer Resonatorstruktur zur Geräuschdämpfung.

### Stand der Technik

Aus der CN 207 315 552 U ist ein Luftfilter bekannt, welcher ein oberes Gehäuseteil, ein Filterelement, ein unteres Gehäuseteil und einen Schalldämpfer umfasst. Das obere Gehäuseteil umfasst eine obere Trennwand, das untere Gehäuseteil umfasst eine untere Trennwand. Die obere Trennwand liegt der unteren Trennwand gegenüber. Die obere Trennwand und die untere Trennwand sind aneinander angepasst. Der durch das obere Gehäuseteil und das untere Gehäuseteil gebildete Hohlraum ist in einen Schalldämpferhohlraum und einen Filterhohlraum unterteilt; das untere Gehäuseteil ist mit einem Lufteinlass versehen, der mit dem Schalldämpferhohlraum in Verbindung steht, und das obere Gehäuseteil ist mit einem Luftauslass versehen, der mit dem Filterhohlraum in Verbindung steht. Das Filterelement befindet sich zwischen dem oberen Gehäuseteil und dem unteren Gehäuseteil. Ein Durchgangsloch ist in der unteren Trennwand angeordnet. Der Schalldämpfer weist eine gekrümmte Oberflächenstruktur und eine Vielzahl von Schalldämpferlöchern auf. Das untere Gehäuseteil umfasst Rippen, welche mit dem Schalldämpfer zusammenwirken, um einen schallabsorbierenden inneren Hohlraum zu bilden, wobei der innere Hohlraum des Schalldämpfers mit dem Lufteinlass in Verbindung steht.

Weitere gattungsgemäße Luftfilter sind aus JP 2002- 61 543 A, KR 2013 0060012 A und CN 112 282 990 A bekannt.

### Offenbarung der Erfindung

Eine Aufgabe ist die Bereitstellung eines Filtersystems mit einem Einlass, zwei Auslassen und einem solchen Filterelement und einer Resonatorstruktur zur Geräuschdämpfung zu schaffen, welches kostengünstig zu fertigen ist.

Die Aufgabe wird gelöst von einem Filtersystem mit einem Filtergehäuse, einem austauschbaren Filterelement, einem Haupteinlass, einem Hauptauslass, einem Nebenanschlussauslass und einer Resonatorstruktur zur Geräuschdämpfung des Nebenanschlussauslasses. Der Filterbalg des austauschbaren Filterelements ist in Strömungsrichtung zwischen dem Haupteinlass und den beiden Auslassen angeordnet. Das Trennwandelement des Filterelements ragt in einen Nebenanschluss-Resonatorbereich im Filtergehäuse. Endbereiche des Trennwandelements liegen jeweils an wenigstens einer den Nebenanschluss-Resonatorbereich begrenzenden Wand an. Günstige Ausgestaltungen und Vorteile der Erfindung ergeben sich aus den weiteren Ansprüchen, der Beschreibung und der Zeichnung.

Es wird ein Filterelement für ein Filtersystem vorgeschlagen, mit einer Halteanordnung, welche an einem Bereich einen Filterbalg und an einem anderen Bereich ein Trennwandelement aufweist. Im bestimmungsgemäßen Verwendungszustand des Filterelements ist das Trennwandelement zwischen zwei abgedichteten Kammern einer Resonatorstruktur, insbesondere eine Resonatorstruktur zur Geräuschdämpfung eines Nebenanschlussauslasses, angeordnet. Das Trennwandelement weist wenigstens einen Durchbruch auf, über den die Kammern im bestimmungsgemäßen Verwendungszustand akustisch miteinander gekoppelt sind.

In vorteilhafter Weise bildet das Trennwandelement die Trennwand zwischen den beiden abgedichteten Kammern der Resonatorstruktur aus. Durch die beiden Kammern entstehen zwei Volumina. Die Volumina entsprechen einer Fluidsäule, insbesondere einer Luftsäule. Mit einer solchen Anordnung lässt sich in vorteilhafte Weise ein sogenannter Nebenschlussresonator darstellen, welcher die beiden Volumina aufweist, die über den wenigstens einen Durchbruch in dem Trennwandelement zwischen den beiden Volumina akustisch gekoppelt sind. Das Trennwandelement kann beispielsweise mehrere Schlitze aufweisen, über welche die beiden Volumina akustisch miteinander gekoppelt sind.

Die Halteanordnung kann eine beliebige, an den Bauraum des korrespondierenden Filtergehäuses angepasste Form aufweisen. Hierbei kann die Halteanordnung bzw. können die Bereiche der Halteanordnung in einer gemeinsamen Ebene angeordnet sein. Alternativ können die Bereiche der Halteanordnung in unterschiedlichen Ebenen angeordnet sein. Bei der Anordnung in einer gemeinsamen Ebene kann diese senkrecht zu einer Strömungsrichtung des zu filternden Fluids ausgerichtet sein. Zudem können die Bereiche der Halteanordnung und die Halteanordnung einen beliebigen Querschnitt aufweisen. Die Querschnitte können kreisrund, rechteckig, dreieckig, mehreckig, oval oder dergleichen sein. Zudem können die Bereiche der Halteanordnung, welche den Filterbalg oder das Trennwandelement aufweisen, unterschiedliche Querschnitte aufweisen.

Der Filterbalg und das Trennwandelement können mit dem gleichen Winkel von dem jeweiligen Bereich der Halteanordnung abstehen. Es sind auch unterschiedliche Winkel je nach Form eines korrespondierenden Filtergehäuses möglich. Des Weiteren kann die Ausrichtung des Filterbalgs und das Trennwandelements an der Halteanordnung an einen Bauraum angepasst werden.

Der Filterbalg kann einen beliebigen Querschnitt aufweisen. Der Querschnitt des Filterbalgs kann kreisrund, rechteckig, dreieckig, mehreckig, oval oder dergleichen sein und kann günstig an einen vorhandenen Bauraum angepasst werden. Zudem kann sich der Querschnitt entlang einer Achse verändern. Der Filterbalg kann ein gefaltetes Filtermedium oder gewickelte Lagen von Filtermedium umfassen. Auch eine Kombination von gefalteten und gewickelten Filtermedien ist möglich. Der Filterbalg ragt im bestimmungsgemäßen Verwendungszustand in einen Rohfluidbereich des Filtergehäuses.

Das Trennwandelement kann ebenfalls eine beliebige an das korrespondierende Filtergehäuse angepasste Form aufweisen. Insbesondere liegen im bestimmungsgemäßen Verwendungszustand Endbereiche des Trennwandelements jeweils an wenigstens einer einen Nebenanschluss-Resonatorbereich begrenzenden Wand an. Die Durchbrüche können eine an die akustischen Eigenschaften angepasste Form und Anordnung am Trennwandelement aufweisen. Dadurch, dass das Trennwandelement an wenigstens einer einen Nebenanschluss-Resonatorbereich begrenzenden Wand anliegt, kann das Fluid lediglich durch den wenigstens einen Durchbruch von der ersten Kammer in die zweite Kammer strömen. Ein Durchströmen des Fluids durch Spalte zwischen dem Trennwandelement und der korrespondierenden Wand kann verhindert werden. Zusätzlich kann ein Dichtungselement zwischen Endbereichen des Trennwandelements und der korrespondierenden Wand angeordnet sein.

Ein mit dem Trennwandelement gebildeter Resonator lässt sich auf sehr begrenztem Bauraum umsetzen und kann kostengünstig hergestellt werden.

Da das Trennwandelement, welches die beiden Kammern des Nebenschlussresonators im Inneren des Filtergehäuses trennt, ein fester Bestandteil des Filterelementes ist, kann das Trennwandelement, mit jedem Filterelementwechsel getauscht werden.

Zudem ist im Verwendungszustand des Filterelements ein Filtern des Fluids und eine Geräuschdämpfung eines Nebenanschlussauslasses nur dann möglich, wenn das Filterelement und das Filtergehäuse aneinander angepasst sind. Dadurch kann sichergestellt werden, dass nur geeignete Filterelemente in das korrespondierende Filtergehäuse eingebaut werden kann, wodurch die Funktionalität eines korrespondierenden Filtersystems verbessert und die Einhaltung eines Qualitätsstandards erleichtert werden können.

Gemäß einer günstigen Ausgestaltung des Filterelements kann das Trennwandelement an einer filterelementseitigen Resonatortrennwand angeordnet sein und kann von der Resonatortrennwand abstehen. Der Bereich der Halteanordnung, an welchem das Trennwandelement angeordnet ist, kann hierbei als Rahmen ausgebildet sein. Die Resonatortrennwand kann an dem Rahmen anliegen bzw. an dem Rahmen befestigt sein und kann einen Freiraum zwischen Rahmenelementen des Rahmens überspannen. Alternativ kann die Resonatortrennwand Teil der Haltevorrichtung sein. Im bestimmungsgemäßen Verwendungszustand kann die Resonatortrennwand eine einen Nebenanschluss-Resonatorbereich begrenzende Wand ausbilden. Das Trennwandelement ragt hierbei im bestimmungsgemäßen Verwendungszustand in dem Nebenanschluss-Resonatorbereich des Filtergehäuses hinein, wodurch die beiden Kammern ausgebildet werden. Durch diese Konstruktion kann sichergestellt werden, dass das Trennwandelement im Nebenanschluss-Resonatorbereich, an der richtigen Position angeordnet ist. Beispielsweise kann das Trennwandelement von oben in den Nebenanschluss-Resonatorbereich ragen und die Resonatortrennwand kann eine Decke des Nebenanschluss-Resonatorbereichs ausbilden, welche beide Kammern abdeckt. Hierbei weist die Resonatortrennwand Abmessungen auf, welche den Querschnitten der beiden Kammern im Bereich, welcher die Resonatortrennwand abdeckt, entsprechen, wodurch beide Kammern von der Resonatortrennwand begrenzt werden und ein unerwünschtes Austreten des Fluids aus den Kammern erschwert ist. Alternativ kann die Resonatortrennwand nur eine Kammer begrenzen oder nur teilweise begrenzen und ein weiteres Wandelement deckt den durch die Resonatortrennwand freiliegenden Bereich ab. Zudem kann ein Volumenverhältnis der beiden Kammern durch die Position des Trennwandelements an der Resonatortrennwand vorgegeben werden.

Gemäß einer günstigen Ausgestaltung des Filterelements kann das Trennwandelement eine kammartige Struktur mit mehreren Durchbrüchen aufweisen, insbesondere können die Durchbrüche dabei Abmessungen aufweisen, welche auf wenigstens eine vorgegebene Frequenz der Resonatorstruktur angepasst ist. Hierbei können die Durchbrüche an einem von der Resonatortrennwand abgewandten Endbereich des Trennwandelements angeordnet sein. Beispielsweise können die Durchbrüche an einem unteren Endbereich angeordnet sein. Durch die kammartige Struktur kann eine günstige Herstellung des Trennwandelements umgesetzt werden. Des Weiteren kann mittels der Durchbrüche eine günstige akustische Ankopplung der beiden für die Resonatorstruktur zur Verfügung stehenden Volumina erreicht werden. Die Geräuschdämpfung kann so wirksam verbessert werden.

Gemäß einer günstigen Ausgestaltung des Filterelements kann die Resonatortrennwand eine Öffnung aufweisen, welche im bestimmungsgemäßen Verwendungszustand einen Einlass zu einer ersten Kammer ausbildet. Durch die Öffnung können gefiltertes Fluid und Störgeräusche in die erste Kammer strömen. Durch eine Wechselwirkung über Fluidsäulen in den korrespondierenden Durchbrüchen und mit der Fluidsäule in der zweiten Kammer können die Störgeräusche gedämpft und dadurch reduziert werden.

Gemäß einer günstigen Ausgestaltung des Filterelements kann das Trennwandelement beabstandet zum Filterbalg angeordnet sein. Hierbei kann die Kontur des Trennwandelements außerhalb des Filterbalges angeordnet sein und dadurch unabhängig von der Form des Filterbalgs oder unabhängig von einer Aussparung im Filterbalg gestaltet werden. Dadurch ist ein Konstrukteur bei der Gestaltung des Trennwandelements und auch bei der Gestaltung der Resonatorstruktur unabhängig von Herstellbarkeitsvoraussetzungen des Filterbalgs.

Gemäß einer günstigen Ausgestaltung des Filterelements kann die Halteanordnung einen umlaufenden Rahmen umfassen, welcher den Filterbalg und die Resonatortrennwand umschließt und welcher ein Dichtungselement aufweist. Der Rahmen kann im bestimmungsgemäßen Verwendungszustand zum Filtergehäuse zuverlässig abgedichtet werden. Dadurch kann verhindert werden, dass ein Fluid zwischen dem Rahmen und einer entsprechenden Gehäusewand des Filtergehäuses durchtritt. Dadurch kann verhindert werden, dass aus dem Rohfluidbereich des Filtergehäuses das Fluid in den Reinfluidbereich des Filtergehäuses gelangt, ohne durch das Filterelement zu strömen. Zudem kann dadurch verhindert werden, dass das Fluid aus dem Filtergehäuse entweichen kann. Das Dichtungselement, welches den Bereich zwischen dem Rahmen des Filterelements und dem Filtergehäuse abdichtet, kann ein geeignetes Dichtmaterial aufweisen, beispielsweise Polyurethan (PUR), welches an den Rahmen angespritzt oder aus welchem der Rahmen gebildet ist. Auf diese Weise kann die Abdichtung einfach und zuverlässig erreicht werden, und es sind keine zusätzlichen Fertigungsschritte erforderlich. Alternativ können auch separate angeknüpfte oder eingeknüpfte Dichtungselemente aus geeignetem Material verwendet werden.

Es wird nach der Erfindung ein Filtersystem mit einem Filtergehäuse, einem austauschbaren Filterelement, einem Haupteinlass, einem Hauptauslass, einem Nebenanschlussauslass und einer Resonatorstruktur zur Geräuschdämpfung des Nebenanschlussauslasses vorgeschlagen. Der Filterbalg des austauschbaren Filterelements ist in Strömungsrichtung zwischen dem Haupteinlass und den beiden Auslassen angeordnet. Das Trennwandelement des Filterelements ragt in einen Nebenanschluss-Resonatorbereich im Filtergehäuse, wobei Endbereiche des Trennwandelements jeweils an wenigstens einer den Nebenanschluss-Resonatorbereich begrenzenden Wand anliegen.

Das Filterelement umfasst einer Halteanordnung, welche an einem Bereich den Filterbalg und an einem anderen Bereich das Trennwandelement aufweist. Im bestimmungsgemäßen Verwendungszustand des Filterelements ist das Trennwandelement zwischen zwei abgedichteten Kammern der Resonatorstruktur, angeordnet. Das Trennwandelement weist wenigstens einen Durchbruch auf, über den die beiden Kammern im bestimmungsgemäßen Verwendungszustand akustisch miteinander gekoppelt sind. Da die Endbereiche des Trennwandelements jeweils an wenigstens einer den Nebenanschluss-Resonatorbereich begrenzenden Wand anliegen, kann das Fluid nur durch die Durchbrüche des Trennwandelements mit der Fluidsäule in der zweiten Kammer wechselwirken. Zwischen den Endbereichen des Trennwandelements und der jeweiligen Wand kann zusätzlich ein Dichtungselement angeordnet sein. Der Nebenanschluss-Resonatorbereich ist im bestimmungsgemäßen Verwendungszustand abgeschlossen, das Fluid kann lediglich durch entsprechende Einlassöffnungen in den Nebenanschluss-Resonatorbereich einströmen und durch entsprechende Auslassöffnungen aus dem Nebenanschluss-Resonatorbereich ausströmen.

Durch den Aufbau des Filterelements können beim Einsetzten des Filterelementes die Kammern für einen Nebenschlussresonator für den Nebenanschlussauslass ausgebildet werden. Hierbei teilt das Trennwandelement den abgeschlossenen Nebenanschluss-Resonatorbereich in zwei Kammern.

Der Nebenanschlussauslass kann zum Beispiel für Nebenverbraucher wie Kompressoren genutzt werden. Dies kann beispielsweise in einem Bremssystem eines Lastkraftwagens Anwendung finden. Hierbei kann gefiltertes Fluid durch eine erste Kammer strömen und mit einer Fluidsäule bzw. mit einem Volumen in der zweiten Kammer durch den wenigstens einen Durchbruch wechselwirken, um Störgeräusche zu dämpfen.

Das Trennwandelement, welches zwischen den beiden Kammern des Nebenschlussresonators im Inneren des Filtergehäuses angeordnet ist, kann mit jedem Filterelementwechsel einfach getauscht werden.

Vorteilhaft umfasst die Resonatorstruktur zur Geräuschdämpfung zwei Teile, ein filterelementseitiges Trennwandelement und wenigstens eine gehäuseseitige Wand, welche den Nebenanschluss-Resonatorbereich umschließt. Mit einer solchen Anordnung lässt sich auf vorteilhafte Weise ein sogenannter Nebenschlussresonator darstellen, welcher zwei Volumina aufweist, die über Durchbrüche, beispielsweise Schlitze, im Trennwandelement zwischen den beiden Volumina akustisch gekoppelt sind.

Ein solcher Resonator lässt sich auf sehr begrenztem Bauraum umsetzen und kann kostengünstig hergestellt werden.

Gemäß einer günstigen Ausgestaltung des Filtersystems kann der Nebenanschluss-Resonatorbereich mit dem Trennwandelement und der wenigstens einen den Nebenanschluss-Resonatorbereich begrenzenden Wand zwei akustisch miteinander gekoppelte und nach außen geschlossene Kammern ausbilden, insbesondere wobei eine der den Nebenanschluss-Resonatorbereich begrenzenden Wände die filterelementseitige Resonatortrennwand ist. Hierbei können Wände von einem wannenförmigen Filtergehäuseteil oder einem wannenförmigen Bereich des Filtergehäuses ausgebildet werden, wobei der von den Wänden umschlossene Bereich von der filterelementseitigen Resonatortrennwand abgedeckt werden kann. Das Trennwandelement kann einen Umriss aufweisen, welcher an die Wannenform des Filtergehäuseteils oder an die Wannenform des Bereichs des Filtergehäuses angepasst ist. Hierbei kann ein unterer Bereich des Trennwandelements an einem Boden oder einer Decke des Filtergehäuses bzw. des Filtergehäuseteils anliegen. Seitenbereiche des Trennwandelements können an Seitenwänden anliegen. Es sind auch andere Formen des Trennwandelements und des Filtergehäuses im Nebenanschluss-Resonatorbereich möglich.

Gemäß einer günstigen Ausgestaltung des Filtersystems kann eine Öffnung einer filterelementseitigen Resonatortrennwand mit der ersten Kammer fluidisch gekoppelt sein und einen Nebenanschlusseinlass ausbilden. Hierbei kann die erste Kammer von gefilterten Fluid durchströmt werden. So kann eine günstige Verbindung zwischen einem Reinfluidbereich im Innenraum des Filtergehäuses zu einem ausreichend großen Volumen zur Geräuschdämpfung hergestellt werden. Zudem kann die erste Kammer als Durchgang zwischen dem Reinfluidbereich und dem Nabenanschlussauslass wirken.

Gemäß einer günstigen Ausgestaltung des Filtersystems kann, das Filtergehäuse eine Öffnung aufweisen, welche fluidisch mit der ersten Kammer gekoppelt ist und welche den Nebenanschlussauslass ausbildet. Durch den Nebenanschlussauslass kann das gefilterte Fluid zum Nebenverbraucher geleitet werden. Hierbei kann der Filterbalg das Fluids sowohl für einen Hauptverbraucher als auch für den Nebenverbraucher filtern.

Gemäß einer günstigen Ausgestaltung des Filtersystems kann der Nebenanschluss-Resonatorbereich Führungselemente aufweisen, welche das Trennwandelement führen. Zudem können die Führungselemente das Trennwandelement in einer vorgegebenen Position fixieren. Durch die Führungselemente, welche beispielsweise als Nut ausgebildet sind, kann das Einführen des Filterelements in das Filtergehäuse und/oder das Positionieren des Filterelements und/oder des Filterbalgs und/oder des Trennwandelements in vorteilhafter Weise erleichtert werden.

Gemäß einer günstigen Ausgestaltung des Filtersystems kann das Filtergehäuse zweiteilig ausgebildet sein, wobei ein Bodenelement den Nebenanschluss-Resonatorbereich aufweist. Hierbei kann das Bodenelement einen Großteil der den Nebenanschluss-Resonatorbereich umgebenden Wände ausbilden. Durch den zweiteiligen Aufbau können das Einführen und Entnehmen des Filterelements und das Reinigen des Filtergehäuses erleichtert werden.

Gemäß einer günstigen Ausgestaltung des Filtersystems kann das Bodenelement den Einlass und den Nebenanschlussauslass aufweisen. Ein Deckelelement kann den Hauptauslass aufweisen. Hierbei strömt ein Fluid von dem Haupteinlass durch den Rohfluidbereich und durch den in den Rohfluidbereich ragenden Filterbalg in einen Reinfluidbereich. Von dort kann das Fluid durch den Hauptauslass aus dem Filtergehäuse strömen. Das Fluid kann auch durch den Nebenabschlusseinlass in die erste Kammer der Resonatorstruktur strömen und von dort durch den Nebenanschlussauslass aus dem Gehäuse strömen. Das gereinigte Fluid kann beispielsweise in einem weiteren System, welches gereinigtes Fluid, beispielsweise Luft benötigt, verwendet werden, beispielsweise in einem Bremssystem für Nutzfahrzeuge oder dergleichen. Des Weiteren kann eine Wechselwirkung des Fluids in der ersten Kammer mit der zweiten Kammer Störgeräusche im Gehäuse oder Störgeräusche am Nebenanschlussauslass reduzieren.

Die Abdichtung der Resonatorstrukturen und der Gehäuseteile kann über ein geeignetes Dichtmaterial, beispielsweise Polyurethan (PUR), erfolgen, welche beispielsweise an ein Rahmenelement der Halteanordnung angespitzt oder gehäuseseitig angespritzt sind. Alternativ kann das Dichtungselement auch ein separates Bauteil sein, welches am Gehäuse und/oder an der Halteanordnung angeknüpft oder eingeknüpft ist. Dadurch kann der Nebenanschluss-Resonatorbereich bzw. können die Kammern des Nebenanschluss-Resonatorbereichs und ein Innenraum des Gehäuses beim bestimmungsgemäßen Zusammenbau zuverlässig abgedichtet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Fig. 1: eine isometrische Ansicht eines Filterelements in einer Ansicht von unten;
- Fig. 2: eine isometrische Ansicht eines Filterelements aus Figur 1 in einer Draufsicht;
- Fig. 3: eine Explosionsansicht eines Filtersystems nach einem Ausführungsbeispiel der Erfindung mit einem Filterelement aus den Figuren 1 und 2;
- Fig. 4: eine isometrische Draufsicht auf ein Bodenelement des Filtersystems aus Figur 3;
- Fig. 5: eine isometrische Ansicht von unten auf ein Deckelelement des Filtersystems aus Figur 3; und
- Fig. 6: eine teilweise geschnittene Ansicht auf das Filtersystem aus Figur 3 im bestimmungsgemäßen Verwendungszustand.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

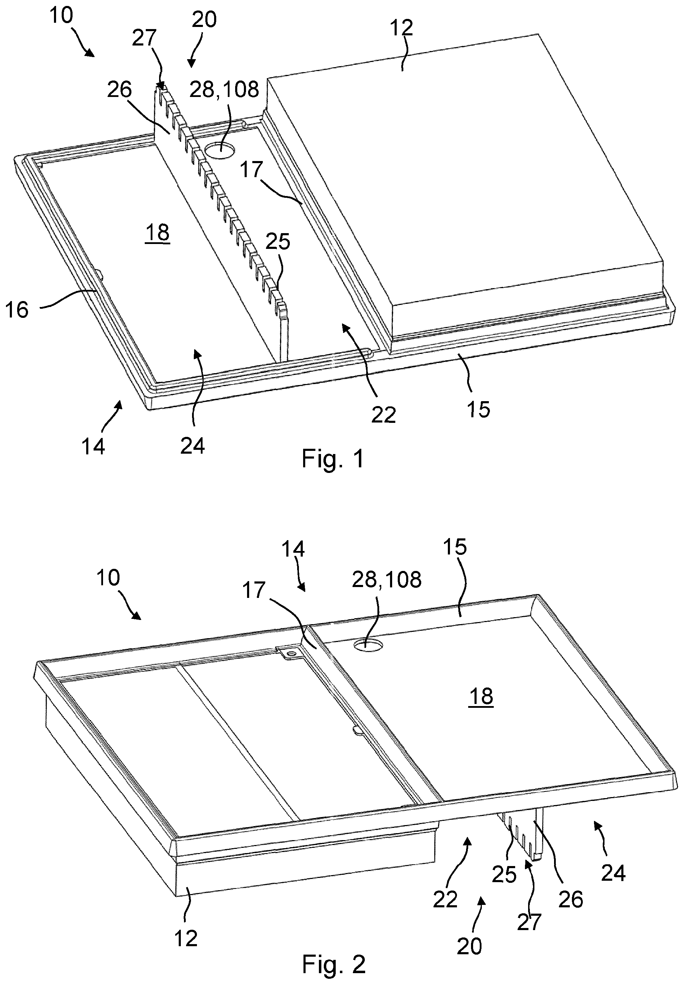

Figur 1 und 2 zeigen jeweils eine isometrische Ansicht eines Filterelements 10 als Untersicht (Figur 1) und Draufsicht (Figur 2).

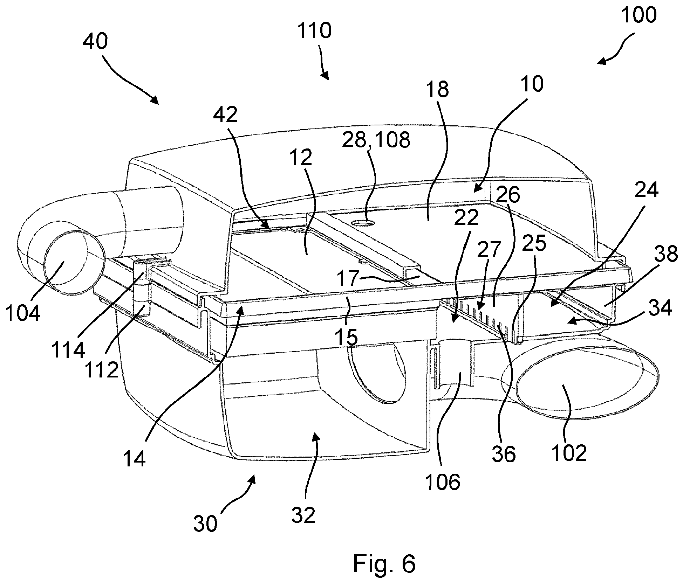

Das Filterelement 10 weist eine Halteanordnung 14 auf, welche an einem Bereich einen Filterbalg 12 und an einem anderen Bereich ein Trennwandelement 26 aufweist. Das Trennwandelement 26 ist im bestimmungsgemäßen Verwendungszustand des Filterelements 10 (Figur 6) zwischen zwei abgedichteten Kammern 22, 24 einer Resonatorstruktur 20 angeordnet. Insbesondere kann die Resonatorstruktur 20 zur Geräuschdämpfung eines Nebenanschlussauslasses 106 ausgebildet sein. Das Trennwandelement 26 weist wenigstens einen Durchbruch 25 auf, über den die beiden Kammern 22, 24 im bestimmungsgemäßen Verwendungszustand akustisch miteinander gekoppelt sind.

Wie aus den Figuren 1 und 2 weiter ersichtlich ist, ist das Trennwandelement 26 im dargestellten Ausführungsbeispiel an einer filterelementseitigen Resonatortrennwand 18 angeordnet und steht von der Resonatortrennwand 18 ab. Des Weiteren weist das Filterelement 10 im dargestellten Ausführungsbeispiel eine Halteanordnung 14 auf, welche einen umlaufenden Rahmen 15 umfasst, welcher den Filterbalg 12 und die Resonatortrennwand 18 jeweils von drei Seiten umschließt und welcher ein Dichtungselement 16 aufweist. Im dargestellten Ausführungsbeispiel ist das Dichtungselement 16 lediglich in dem Bereich des Rahmens 15 angeordnet, welcher um die Resonatortrennwand 18 verläuft. In einem alternativen Ausführungsbeispiel kann das Dichtungselement 16 oder ein weiteres Dichtungselement in dem Bereich um den Faltenbalg 12 verlaufen. Die Resonatortrennwand 18 und der Faltenbalg 12 sind im dargestellten Ausführungsbeispiel an einer Unterseite des Rahmens 15 mit dem Rahmen 15 verbunden. Flächen der Rahmenelemente verlaufen senkrecht zur Oberseite und zur Unterseite des Filterbalgs 12 und senkrecht zur Oberseite und zur Unterseite der Resonatortrennwand 18. Schmalseiten der Rahmenelemente verlaufen jeweils parallel zu Oberseiten und Unterseiten des Filterbalgs 12 und der Resonatortrennwand 18. Zudem weisen der Faltenbalg 12 und die Resonatortrennwand 18 einen rechteckigen Querschnitt auf. Des Weiteren verläuft ein Steg 17 im Rahmen 15, welcher den von dem Rahmen 15 umschlossenen Bereich in zwei Teilbereiche teilt, welche den Bereichen für den Filterbalg 12 und der Resonatortrennwand 18 entsprechen. Des Weiteren sind die Abmessungen der Teilbereiche im dargestellten Ausführungsbeispiel so gestaltet, dass der Teilbereich mit dem Faltenbalg 12 an einen Querschnitt eines Rohfluidbereichs 32 des Filtergehäuses 110 angepasst ist und der Teilbereich mit der Resonatortrennwand 18 bzw. mit dem Trennwandelement 26 an einen Querschnitt des Nebenanschluss-Resonatorbereichs 34 abgepasst ist. Dadurch wird im dargestellten Ausführungsbeispiel im bestimmungsgemäßen Verwendungszustand der Rohfluidbereich 32 durch den Filterbalg 12 und der Nebenanschluss-Resonatorbereich 34 durch die Resonatortrennwand 18 abgedeckt.

In einem nicht dargestellten Ausführungsbeispiel sind andere Formen und Abmessungen der Halteanordnung 14 und/oder des Rahmens 15 und/oder des Stegs 17 und/oder des Trennwandelements 26 und/oder der Resonatortrennwand 18 und/oder des Faltenbalgs 12 möglich. Beispielsweise können die Querschnitte andere Formen, als die dargestellten rechteckigen Formen aufweisen.

Wie aus Figur 1 und 2 weiter ersichtlich ist, weist das Trennwandelement 26 im dargestellten Ausführungsbeispiel eine kammartige Struktur 27 mit mehreren, in diesem Beispiel schlitzartigen Durchbrüchen 25 auf. Die Durchbrüche 25 weisen Abmessungen auf, welche an wenigstens eine vorgegebene Frequenz der Resonatorstruktur 20 angepasst sind. Die Durchbrüche 25 des Trennwandelements 26 sind im dargestellten Ausführungsbeispiel an einem von der Resonatortrennwand 18 abgewandten Endbereich des Trennwandelements 26 angeordnet. Die Durchbrüche 25 sind nach unten offen und werden erst im bestimmungsgemäßen Verwendungszustand (Figur 6) durch eine Gehäusewand des Filtergehäuses 110 geschlossen. In einem alternativen nicht dargestellten Ausführungsbeispiel kann die kammartige Struktur 27 des Trennwandelements 26 auch an einem anderen Endbereich angeordnet sein. Des Weiteren kann der Durchbruch 25 oder können die Durchbrüche 25 auch an anderen geeigneten Bereichen des Trennwandelements 26 in das Trennwandelement 26 eingebracht werden. Des Weiteren sind andere geeignete Strukturen als die dargestellte kammartige Struktur 27 möglich.

Wie aus Figur 1 und 2 weiter ersichtlich ist, weist die filterelementseitige Resonatortrennwand 18 eine Öffnung 28 auf, welche im bestimmungsgemäßen Verwendungszustand (Figur 6) einen Einlass zu einer ersten Kammer 22 ausbildet. Die Öffnung weist einen runden Querschnitt auf, es sind aber auch andere geeignete Formen, wie eckige oder ovale Formen, möglich.

Wie aus Figur 1 und 2 weiter ersichtlich ist, ist das Trennwandelement 26 beabstandet zum Filterbalg 12 angeordnet. Dadurch können das Trennwandelement 26 eine das Trennwandelement 26 aufweisende Resonatorstruktur 20 unabhängig vom Filterbalg 12 gestaltet werden.

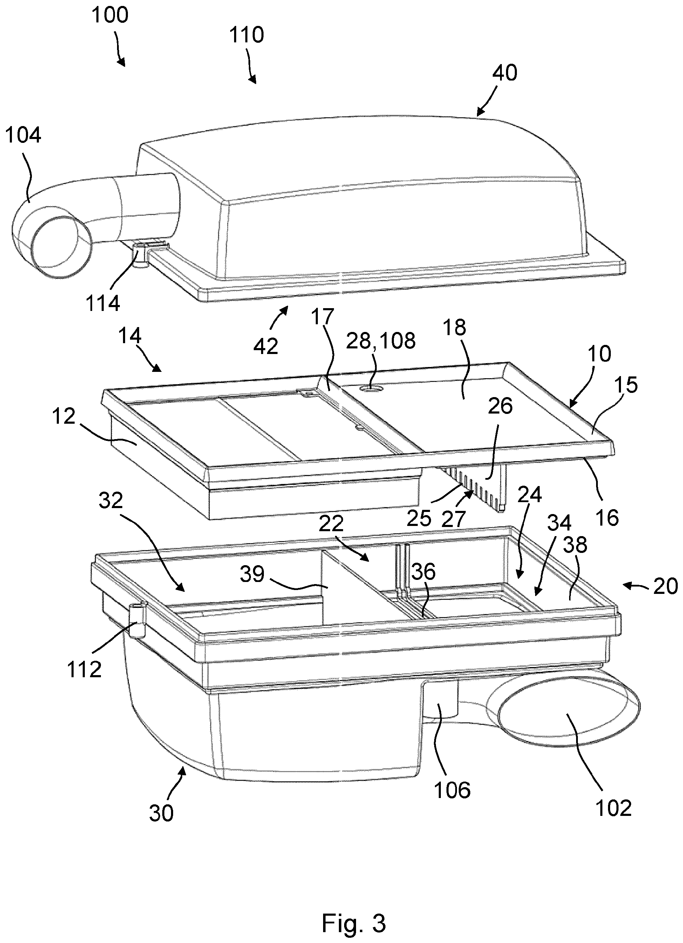

Wie aus den Figuren 3 bis 6 weiter ersichtlich ist, umfasst das Filtersystem 100 ein Filtergehäuse 110, ein in den Figuren 1 und 2 dargestelltes, austauschbares Filterelement 10, einen Haupteinlass 102, einem Hauptauslass 104 einen Nebenanschlussauslass 106 und einer Resonatorstruktur 20 zur Geräuschdämpfung des Nebenanschlussauslasses 106. Der Filterbalg 12 des austauschbaren Filterelements 10 ist in Strömungsrichtung zwischen dem Haupteinlass 102 und den beiden Auslassen 104, 106 angeordnet. Das Trennwandelement 26 des Filterelements 10 ragt in den Nebenanschluss-Resonatorbereich 34 im Filtergehäuse 110. Die Endbereiche des Trennwandelements 26 liegen jeweils an wenigstens einer den Nebenanschluss-Resonatorbereich 34 begrenzenden Wand 38 an.

Wie aus Figur 6 weiter ersichtlich ist, ist der durch das Filtergehäuse 110 umschlossene Innenraum in drei Bereiche unterteilt. Den Rohfluidbereich 32, welcher an den Haupteinlass 102 und den Filterbalg 12 anschließt, ein Reinfluidbereich 42 welcher an einer dem Rohfluidbereich 32 abgewandten Seite des Filterbalgs 12 anschließt und dadurch in Strömungsrichtung des Fluids nach dem Filterbalg 12 angeordnet ist, und der Nebenanschluss-Resonatorbereich 34, welcher an den Reinfluidbereich 42 angrenzt. Der Reinfluidbereich 42 ist mit dem Hauptauslass 104 gekoppelt, der Nebenanschluss-Resonatorbereich 34 ist mit dem Nebenanschlussauslass 106 gekoppelt. Die Bereiche sind durch Wände so umschlossen, dass das Fluid lediglich durch den Filterbalg 12 von dem Rohfluidbereich 32 in den Reinfluidbereich 42 strömen kann. Des Weiteren gibt es keine Möglichkeit, für das Fluid direkt vom Rohfluidbereich 32 in den Nebenanschluss-Resonatorbereich 34 zu strömen. Im Reinfluidbereich 42 kann das Fluid durch den Hauptauslass 104 aus dem Filtergehäuse 110 strömen. Zudem kann das Fluid aus dem Reinfluidbereich 42 in den Nebenanschluss-Resonatorbereich 34 strömen und von dort durch Nebenanschlussauslass 106 aus dem Filtergehäuse 110 strömen.

Wie aus den Figuren 3 bis 6 weiter ersichtlich ist, ist das Filtergehäuse 110 im dargestellten Ausführungsbeispiel zweiteilig ausgebildet. Ein Bodenelement 30 weist den Nebenanschluss-Resonatorbereich 34 auf. Hierbei umschließen Wände 38 des Bodenelements 30, den Nebenanschluss-Resonatorbereich 34 zumindest teilweise. Die Wände 38 sind als Seitenwände und als Boden ausgebildet. Die Decke, welche den Nebenanschluss-Resonatorbereich 34 abdeckt, wird von der Resonatortrennwand 18 des Filterelements 10 ausgebildet. Das Trennwandelement 26 des Filterelements 10 teilt den Nebenanschluss-Resonatorbereich 34 in die beiden Kammern 22, 24 auf. Dadurch werden im Nebenanschluss-Resonatorbereich 34 durch das Trennwandelement 26 und der wenigstens einen den Nebenanschluss-Resonatorbereich 34 begrenzenden Wand 38 und der Resonatortrennwand 18 zwei akustisch miteinander gekoppelte und nach außen geschlossene Kammern 22, 24 ausbildet. Über die Durchbrüche 25 des Trennwandelements 26 sind die beiden Kammern 22, 24 akustisch miteinander gekoppelt. Die Öffnung 28 der filterelementseitigen Resonatortrennwand 18 ist fluidisch mit einer ersten Kammer 22 gekoppelt und koppelt die erste Kammer 22 fluidisch mit dem Reinfluidbereich 42. Des Weiteren bildet die Öffnung 28 einen Nebenanschlusseinlass 108 aus. Der Nebenanschlusseinlass 108 ist dadurch im Reinfluidbereich 42 im Filtergehäuse 110 angeordnet. Das Filtergehäuse 110 weist zudem eine Öffnung auf, welche fluidisch mit der ersten Kammer 22 gekoppelt ist und welche den Nebenanschlussauslass 106 ausbildet. Dadurch kann das gefilterte Fluid durch die erste Kammer 22 der Resonatorstruktur 20 strömen, um zu einem weiteren Verbraucher zu gelangen. Der weitere Verbraucher kann ein Kompressor in einem Bremssystem eines Lastkraftwagens sein. Beim Durchströmen der ersten Kammer 22 können durch die Wechselwirkung mit der zweiten Kammer 24 Störgeräusche gedämpft werden.

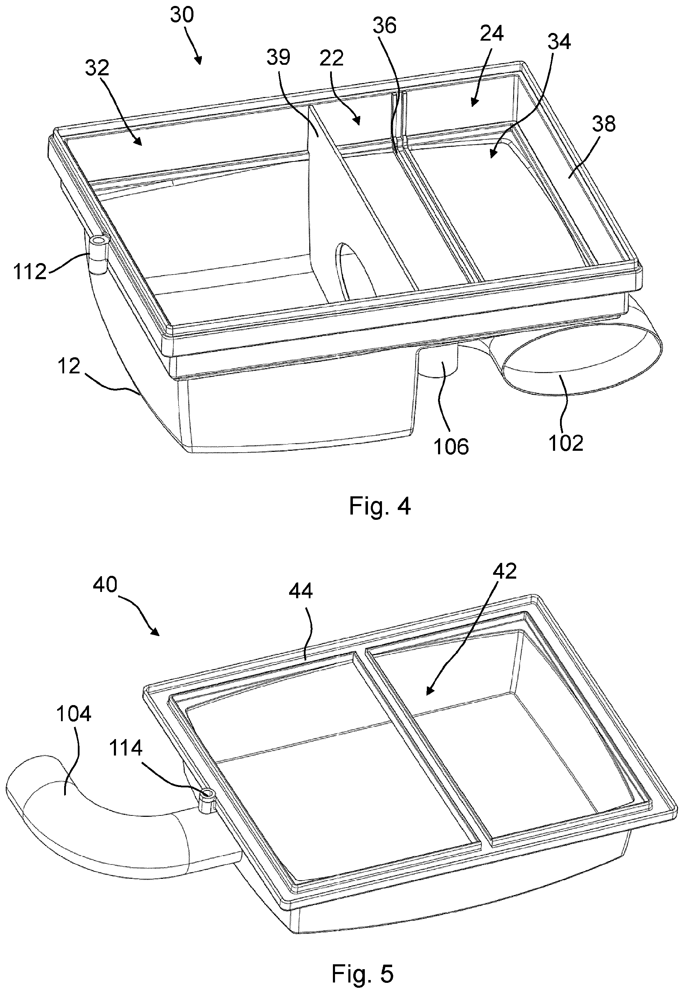

Wie aus den Figuren 3 und 4 weiter ersichtlich ist, weist das Bodenelement 30 den Haupteinlass 102 und den Nebenanschlussauslass 106 auf. Des Weiteren weist der Nebenanschluss-Resonatorbereich 34 Führungselemente 36 auf, welche das Trennwandelement 26 führen. Eine Führung des Trennwandelements 26 kann erfolgen, wenn das Filterelement 10 ausgetauscht wird und zu diesem Zweck das Filterelement 10 aus dem Filtergehäuse 110 entnommen oder wenn ein neues Filterelement 10 in dem Filtergehäuse 110 angeordnet wird. Die Führungselemente 36 sind im dargestellten Ausführungsbeispiel als Nut ausgebildet und verlaufen an gegenüberliegenden Seitenwandbereichen und am Boden. In einem nicht dargestellten Ausführungsbeispiel ist im Führungselement 36 ein Dichtungselement angeordnet.

Wie aus den Figuren 3, 5 und 6 weiter ersichtlich ist, weist ein Deckelelement 40 des Filtergehäuses 110 den Hauptauslass 104 auf.

Wie aus Figur 5 weiter ersichtlich ist, weist das Deckelelement 40 an einem dem Bodenelement 30 zugewandten Endbereich einen Aufnahmebereich 44 auf. Der Aufnahmebereich 44 ist als Rille oder als Nut ausgebildet und ist umlaufend am Deckelelement 40 angeordnet. Der Aufnahmebereich 44 ist gegenüberliegend zum Rahmen 15 und zum Steg 17 der Halteanordnung 14 angeordnet. Der Aufnahmebereich 44 nimmt im bestimmungsgemäßen Verwendungszustand den Rahmen 15 und den Steg 17 der Halteanordnung 14 sowie das Dichtungselement 16 und einen umlaufenden Rand des Bodenelements 30 auf. Dadurch können die Bereiche im Innenraum des Gehäuses 110 zuverlässig abgegrenzt werden. Die Gehäuseteile 30, 40 weisen zudem Verbindungselemente 114, 112 auf, um im bestimmungsgemäßen Verwendungszustand miteinander verbunden zu werden.

Wie aus den Figuren 3 und 6 weiter ersichtlich ist, liegt die Resonatortrennwand 18 mit einer Unterseite an einer Zwischenwand 39 an, welche mit einem oberen Bereich den Rohfluidbereich 32 vom Nebenanschluss-Resonatorbereich 34 trennt und mit einem unteren Bereich eine Außenwand ausbildet. Zudem liegt die Resonatortrennwand 18 und/oder die die Resonatortrennwand 18 umgebenden Rahmenelemente an einer Innenkante des Bodenelements 30 an.

In einem alternativen nicht dargestellten Ausführungsbeispiel kann das Filtergehäuse 110 auch nur aus einem Filtergehäuseteil 30, 40 oder aus mehr als zwei Filtergehäuseteilen 30, 40 gebildet sein.

### Bezugszeichen

- 10: Filterelement
- 12: Filterbalg
- 14: Halteanordnung
- 15: Rahmen
- 16: Dichtungselement
- 17: Steg
- 18: filterelementseitige Resonatortrennwand
- 20: Resonatorstruktur
- 22: Kammer
- 24: Kammer
- 25: Durchbruch
- 26: Trennwandelement
- 27: kammartige Struktur
- 28: Öffnung
- 30: Bodenelement / Filtergehäuseteil
- 32: Rohfluidbereich
- 34: Nebenanschluss-Resonatorbereich
- 36: Führungselement
- 38: bodenelementseitige Resonatortrennwand / begrenzende Wand
- 39: Zwischenwand
- 40: Deckelelement / Filtergehäuseteil
- 42: Reinfluidbereich
- 44: Aufnahmebereich
- 100: Filtersystem
- 102: Haupteinlass
- 104: Hauptauslass
- 106: Nebenanschlussauslass
- 108: Nebenanschlusseinlass
- 110: Filtergehäuse
- 112: Verbindungselement
- 114: Verbindungselement

## Patentansprüche

1. Filtersystem (100) mit einem Filtergehäuse (110), einem austauschbaren Filterelement (10), mit einer Halteanordnung (14), welche an einem Bereich einen Filterbalg (12) und an einem anderen Bereich ein Trennwandelement (26) aufweist, welches im bestimmungsgemäßen Verwendungszustand des Filterelements (10) zwischen zwei abgedichteten Kammern (22, 24) einer Resonatorstruktur (20), insbesondere einer Resonatorstruktur (20) zur Geräuschdämpfung eines Nebenanschlussauslasses (106), angeordnet ist, wobei das Trennwandelement (26) wenigstens einen Durchbruch (25) aufweist, über den die beiden Kammern (22, 24) im bestimmungsgemäßen Verwendungszustand akustisch miteinander gekoppelt sind, und einem Haupteinlass (102), einem Hauptauslass (104), einem Nebenanschlussauslass (106) und einer Resonatorstruktur (20) zur Geräuschdämpfung des Nebenanschlussauslasses (106), wobei der Filterbalg (12) des austauschbaren Filterelements (10) in Strömungsrichtung zwischen dem Haupteinlass (102) und den beiden Auslassen (104, 106) angeordnet ist, wobei das Trennwandelement (26) des Filterelements (10) in einen Nebenanschluss-Resonatorbereich (34) im Filtergehäuse (110) ragt, wobei Endbereiche des Trennwandelements (26) jeweils an wenigstens einer den Nebenanschluss-Resonatorbereich (34) begrenzenden Wand anliegen.

2. Filtersystem nach Anspruch 1, wobei das Trennwandelement (26) an einer filterelementseitigen Resonatortrennwand (18) angeordnet ist und von der Resonatortrennwand (18) absteht.

3. Filtersystem nach Anspruch 2, wobei die filterelementseitige Resonatortrennwand (18) eine Öffnung (28) aufweist, welche im bestimmungsgemäßen Verwendungszustand einen Einlass zu einer ersten Kammer (22) ausbildet.

4. Filtersystem nach einem der vorhergehenden Ansprüche, wobei das Trennwandelement (26) beabstandet zum Filterbalg (12) angeordnet ist.

5. Filtersystem nach einem der vorhergehenden Ansprüche, wobei die Halteanordnung (14) einen umlaufenden Rahmen (15) umfasst, welcher den Filterbalg (12) und die Resonatortrennwand (18) umschließt und welcher ein Dichtungselement (16) aufweist.

6. Filtersystem nach einem der vorhergehenden Ansprüche, wobei der Nebenanschluss-Resonatorbereich (34) mit dem Trennwandelement (26) und der wenigstens einen den Nebenanschluss-Resonatorbereich (34) begrenzenden Wand zwei fluidisch miteinander gekoppelte und nach außen geschlossene Kammern (22, 24) ausbildet, insbesondere wobei eine der den Nebenanschluss-Resonatorbereich (34) begrenzenden Wände die filterelementseitige Resonatortrennwand (18) ist.

7. Filtersystem nach einem der Ansprüche 3-6 wobei die Öffnung (28) der filterelementseitigen Resonatortrennwand (18) mit der ersten Kammer (22) fluidisch gekoppelt ist und einen Nebenanschlusseinlass (108) ausbildet.

8. Filtersystem nach Anspruch 7, wobei das Filtergehäuse (110) eine Öffnung aufweist, welche fluidisch mit der ersten Kammer (22) gekoppelt ist und welche den Nebenanschlussauslass (106) ausbildet.

9. Filtersystem nach einem der Ansprüche 6 bis 8, wobei der Nebenanschluss-Resonatorbereich (34) Führungselemente (36) aufweist, welche das Trennwandelement (26) führen.

10. Filtersystem nach einem der vorhergehenden Ansprüche, wobei das Filtergehäuse (110) zweiteilig ausgebildet ist, insbesondere wobei ein Bodenelement (30) den Nebenanschluss-Resonatorbereich (34) aufweist.

11. Filtersystem nach Anspruch 10, wobei ein Bodenelement (30) den Einlass (102) und den Nebenanschlussauslass (106) aufweist und wobei ein Deckelelement (40) den Hauptauslass (104) aufweist.

## Claims

1. A filter system (100) with a filter housing (110), a replaceable filter element (10) with a holding arrangement (14) which features a filter bellows (12) at one area and a partition wall element (26) at another area, which, in the intended state of use of the filter element (10), is disposed between two sealed chambers (22, 24) of a resonator structure (20), in particular a resonator structure (20) for noise insulation of a secondary connection outlet (106), wherein the partition wall element (26) features at least one breakthrough (25) through which the two chambers (22, 24) are acoustically coupled to each other in the intended state of use, and a main inlet (102), a main outlet (104), a secondary connection outlet (106), and a resonator structure (20) for noise insulation of the secondary connection outlet (106), wherein the filter bellows (12) of the replaceable filter element (10) is disposed in the direction of flow between the main inlet (102) and the two outlets (104, 106) in the direction of flow, wherein the partition wall element (26) of the filter element (10) protrudes into a secondary connection resonator area (34) in the filter housing (110), wherein end regions of the partition wall element (26) each abut at least one wall delimiting the secondary connection resonator area (34).

2. The filter system according to claim 1, wherein the partition wall element (26) is disposed on a resonator partition wall (18) on the filter element-side and protrudes from the resonator partition wall (18).

3. The filter system according to claim 2, wherein the resonator partition wall (18) on the filter element-side features an opening (28) which, in the intended state of use, forms an inlet to a first chamber (22).

4. The filter system according to one of the preceding claims, wherein the partition wall element (26) is spaced apart from the filter bellows (12).

5. The filter system according to one of the preceding claims, wherein the holding arrangement (14) comprises a circumferential frame (15) which surrounds the filter bellows (12) and the resonator partition wall (18) and which features a sealing element (16).

6. The filter system according to one of the preceding claims, wherein the secondary connection resonator area (34) forms two fluidically coupled and outwardly closed chambers (22, 24) with the partition wall element (26) and the at least one wall delimiting the secondary connection resonator area (34), in particular wherein one of the walls delimiting the secondary connection resonator area (34) is the resonator partition wall (18) on the filter element-side.

7. The filter system according to one of the claims 3 to 6, wherein the opening (28) of the resonator partition wall (18) on the filter element-side is fluidically coupled to the first chamber (22) and forms a secondary connection inlet (108).

8. The filter system according to claim 7, wherein the filter housing (110) features an opening which is fluidically coupled to the first chamber (22) and which forms the secondary connection outlet (106).

9. The filter system according to one of the claims 6 to 8, wherein the secondary connection resonator area (34) features guide elements (36) which guide the partition wall element (26).

10. The filter system according to one of the preceding claims, wherein the filter housing (110) is designed in two parts, in particular wherein a bottom element (30) features the secondary connection resonator area (34).

11. The filter system according to claim 10, wherein a bottom element (30) features the inlet (102) and the secondary connection outlet (106) and wherein a cover element (40) features the main outlet (104).

## Revendications

1. Système de filtre (100) avec un boîtier de filtre (110), un élément filtrant (10) échangeable, avec une structure de maintien (14) qui présente, dans une zone, un soufflet de filtre (12) et, dans une autre zone, un élément de cloison (26) qui est disposé, conformément à l'utilisation prévue de l'élément filtrant (10), entre deux chambres étanches (22, 24) d'une structure de résonateur (20), en particulier d'une structure de résonateur (20) destinée à l'insonorisation d'une sortie de raccordement secondaire (106), l'élément de cloison (26) présentant au moins un passage (25) par lequel les deux chambres (22, 24) sont reliées acoustiquement l'une à l'autre conformément à l'utilisation prévue, et une entrée principale (102), une sortie principale (104), une sortie de raccordement secondaire (106) et une structure de résonateur (20) destinée à l'insonorisation de la sortie de raccordement secondaire (106), le soufflet de filtre (12) de l'élément filtrant (10) échangeable étant disposé, dans la direction d'écoulement, entre l'entrée principale (102) et les deux sorties (104, 106), l'élément de cloison (26) de l'élément filtrant (10) pénétrant dans une zone de résonateur de raccordement secondaire (34) dans le boîtier de filtre (110), les zones d'extrémité de l'élément de cloison (26) ayant contact chacune avec au moins une paroi délimitant la zone de résonateur de raccordement secondaire (34).

2. Système de filtre selon la revendication 1, l'élément de cloison (26) étant disposé sur une paroi de séparation de résonateur (18) du côté de l'élément filtrant et dépassant de la paroi de séparation de résonateur (18).

3. Système de filtre selon la revendication 2, la paroi de séparation de résonateur (18) du côté de l'élément filtrant présentant une ouverture (28) qui, conformément à l'utilisation prévue, forme une entrée vers une première chambre (22).

4. Système de filtre selon l'une quelconque des revendications précédentes, l'élément de cloison (26) étant espacé du soufflet de filtre (12).

5. Système de filtre selon l'une quelconque des revendications précédentes, la structure de maintien (14) comprenant un cadre périphérique (15) qui entoure le soufflet de filtre (12) et la paroi de séparation de résonateur (18) et qui présente un élément d'étanchéité (16).

6. Système de filtre selon l'une quelconque des revendications précédentes, la zone de résonateur de raccordement secondaire (34) formant, avec l'élément de cloisons (26) et une paroi, au moins au nombre d'une, délimitant la zone de résonateur de raccordement secondaire (34), deux chambres reliées l'une à l'autre de manière fluidique et fermées vers l'extérieur (22, 24), en particulier l'une des parois délimitant la zone de résonateur de raccordement secondaire (34) étant la paroi de séparation de résonateur (18) du côté de l'élément filtrant.

7. Système de filtre selon l'une quelconque des revendications 3 à 6, l'ouverture (28) de la paroi de séparation de résonateur (18) du côté de l'élément filtrant étant reliée de manière fluidique avec la première chambre (22) et formant une entrée de raccordement secondaire (108).

8. Système de filtre selon la revendication 7, le boîtier de filtre (110) présentant une ouverture qui est reliée de manière fluidique avec la première chambre (22) et qui forme la sortie de raccordement secondaire (106).

9. Système de filtre selon l'une quelconque des revendications 6 à 8, la zone de résonateur de raccordement secondaire (34) présentant des éléments de guidage (36) qui guident l'élément de cloison (26).

10. Système de filtre selon l'une quelconque des revendications précédentes, le boîtier de filtre (110) étant constitué de deux parties, en particulier un élément de fond (30) présentant la zone de résonateur de raccordement secondaire (34).

11. Système de filtre selon la revendication 10, un élément de fond (30) présentant l'entrée (102) et la sortie de raccordement secondaire (106) et un élément de couvercle (40) présentant la sortie principale (104).
